# EUROPEAN PATENT SPECIFICATION

(11) **EP 3 472 975 B1**
(45) Date of publication and mention of the grant of the patent: **30.03.2022**
(21) Application number: 17711854.4
(22) Date of filing: 28.02.2017
(51) Int. Cl.: H04L 12/26

(54) **END-TO-END TECHNIQUES TO COLLECT PM (PERFORMANCE MEASUREMENT) DATA FROM A NVF (NETWORK FUNCTION VIRTUALIZATION) INFRASTRUCTURE**
TECHNIKEN ALS ENDE ZU ENDE SAMMELN VON LEISTUNGSMESSUNGDATEN AUS EINER NETZWERKFUNKTION-VIRTUALISIERUNG-INFRASTRUKTUR
TECHNIQUES DE BOUT EN BOUT POUR RECUEILLIR DES DONNÉES DE MESURE DE PERFORMANCE À PARTIR D'UNE INFRASTRUCTURE DE FONCTION DE RÉSEAU

(30) Priority: 20.06.2016 US 201662352446 P
(43) Date of publication of application: 24.04.2019
(73) Proprietor: Apple Inc., Cupertino, CA 95014 (US)
(72) Inventor: CHOU, Joey, Scottsdale Arizona 85258 (US); WANG, Xuesong, Beijing Heilongjiang 100102 (CN)
(74) Representative: Lang, Johannes
(86) International application number: PCT/US2017/019942
(87) International publication number: WO 2017/222609

(56) References cited:
- US-A1- 2010 121 975
- US-A1- 2016 150 421

## Description

### REFERENCE TO RELATED APPLICATIONS

This application claims the benefit of U.S. Provisional Application No. 62/352,446 filed June 20, 2016, entitled "AN END-TO-END METHOD TO COLLECT PM DATA FROM THE NFV INFRASTRUCTURE".

### FIELD

The present disclosure relates to core network technology of a communication network, and more specifically to end-to-end techniques for operations associated with collection of PM (Performance Measurement) data in connection with virtual network functions (VNFs).

### BACKGROUND

Network Function Virtualization (NFV) involves the replacement of physical network nodes with Virtual Network Functions (VNFs) implemented via Virtualization Resources (VRs) that perform the same function as the physical node.

US 2016/150421 A1 discloses a method for network adaptation includes receiving, by an adaptation coordinator of a virtual network, a performance measurement generated at a performance checkpoint located in the virtual network, generating, by the adaptation coordinator, a first update of a service-specific configuration of the virtual network, wherein the first update includes at least one of a modification of a performance checkpoint configuration, a modification of a Virtual Network Function (VNF) configuration, a modification of a protocol configuration, a modification of a resource allocation input, or a modification of a logical graph, wherein the service-specific configuration includes a configuration of a plurality of logical nodes and a plurality of logical links of the virtual network in accordance with a service-specific data plane logical topology.

### SUMMARY

The present invention is defined by the features of the independent claim(s). Preferred advantageous embodiments thereof are defined by the sub-features of the dependent claims.

Any reference to "embodiment(s)", "example(s)" or "aspect(s) of the invention" in this description not falling under the scope of the claims should be interpreted as illustrative example(s) for understanding the invention.

### BRIEF DESCRIPTION OF THE DRAWINGS

FIG. 1 is a diagram illustrating components of a network in accordance with some embodiments.
FIG. 2 is a block diagram illustrating components, according to some example embodiments, able to read instructions from a machine-readable or computer-readable medium (e.g., a machine-readable storage medium) and perform any one or more of the methodologies discussed herein.
FIG. 3 is a diagram of an architecture that facilitates VR (Virtualization Resource) PM (Performance Measurement) threshold creation and/or associated operations according to various aspects described herein.
FIG. 4 is a block diagram of a system employable by a Network Manager (NM) that facilitates creation of a VNF (Virtual Network Function) related VR PM and associated operations, according to various aspects described herein.
**FIG. 5** is a block diagram of a system employable by an Element Manager (EM) that facilitates creation of a VNF related VR PM and associated operations, according to various aspects described herein.
**FIG. 6** is a block diagram of a system employable by a Virtual Network Function Manager (VNFM) that facilitates creation of a VNF related VR PM and associated operations, according to various aspects described herein.
**FIG. 7** is a block diagram of a system employable by a Virtualized Infrastructure Manager (VIM) that facilitates creation of a VNF related VR PM and associated operations, according to various aspects described herein.
**FIG. 8** is a block diagram of a system employable by a Network Function Virtualization Infrastructure (NFVI) that facilitates creation of a VNF related VR PM and associated operations, according to various aspects described herein.
**FIG. 9** is a flow diagram of a method that facilitates end-to-end techniques for creation of a VNF related VR PM and associated operations, according to various aspects described herein.
**FIG. 10** is a flow diagram of a method that facilitates VNF related VR PM creation and associated operations by a NM according to various aspects described herein.
**FIG. 11** is a flow diagram of a method that facilitates VNF related VR PM creation and associated operations by an EM according to various aspects described herein.
**FIG. 12** is a flow diagram of a method that facilitates VNF related VR PM creation and associated operations by a VNFM according to various aspects described herein.
**FIG. 13** is a flow diagram of a method that facilitates threshold creation and associated operations by a VIM according to various aspects described herein.
**FIG. 14** is a flow diagram of a method that facilitates threshold creation and associated operations by a NFVI according to various aspects described herein.

### DETAILED DESCRIPTION

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (e.g., mobile phone, etc.) with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising."

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

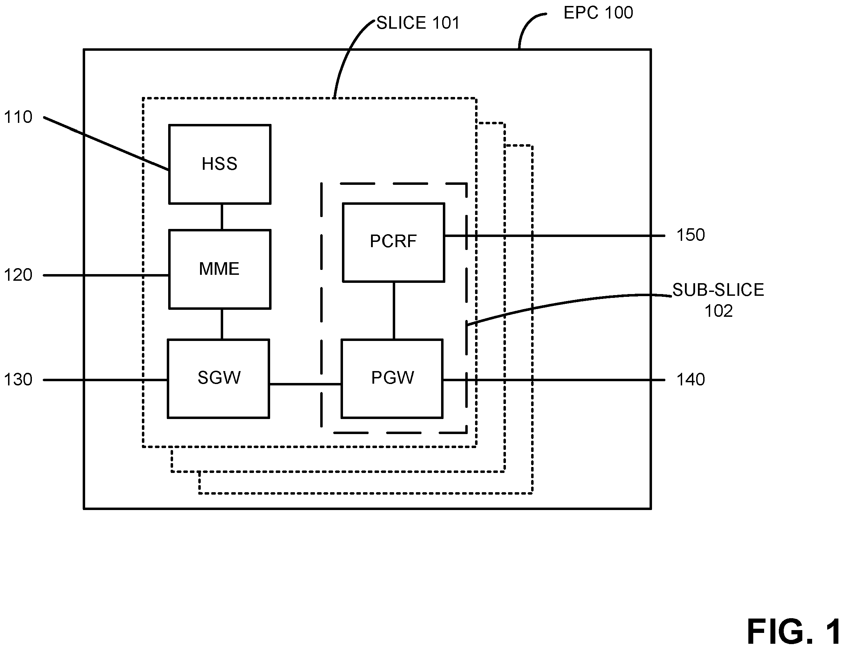

Embodiments described herein may be implemented into a system using any suitably configured hardware and/or software. **FIG. 1** illustrates components of a network in accordance with some embodiments. In various aspects, part(s) or all of one or more of the components illustrated in connection with FIG. 1 can be implemented as virtual network functions (VNFs) in connection with various aspects described herein. An Evolved Packet Core (EPC) network 100 is shown to include a Home Subscriber Server (HSS) 110, a Mobility Management Entity (MME) 120, a Serving GateWay (SGW) 130, a Packet Data Network (PDN) GateWay (PGW) 140, a Policy and Charging Rules Function (PCRF) 150.

The HSS 110 comprises one or more databases for network users, including subscription-related information to support the network entities' handling of communication sessions. For example, the HSS 110 may provide support for routing/roaming, authentication, authorization, naming/addressing resolution, location dependencies, etc. The EPC network 100 may comprise one or several HSSs 110, depending on the number of mobile subscribers, on the capacity of the equipment, on the organization of the network, etc.

The MME 120 is similar in function to the control plane of legacy Serving General packet radio service (GPRS) Support Nodes (SGSN). The MMEs 120 manage mobility aspects in access such as gateway selection and tracking area list management. The EPC network 100 may comprise one or several MMEs 120

The SGW 130 terminates the interface toward an Evolved UMTS (Universal Mobile Telecommunications System) Terrestrial Radio Access Network (E-UTRAN), and routes data packets between the E-UTRAN and the EPC network 100. In addition, the SGW 130 may be a local mobility anchor point for inter-eNodeB handovers and also may provide an anchor for inter-3GPP mobility. Other responsibilities may include lawful intercept, charging, and some policy enforcement.

The PGW 140 terminates an SGi interface toward the PDN. The PGW 140 routes data packets between the EPC network 100 and external networks, and may be a node for policy enforcement and charging data collection. The PCRF 150 is the policy and charging control element of the EPC network 100. In a non-roaming scenario, there may be a single PCRF in the Home Public Land Mobile Network (HPLMN) associated with a User Equipment's (UE) Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 150 may be communicatively coupled to an application server (alternatively referred to as application function (AF)). Generally, the application server is an element offering applications that use Internet Protocol (IP) bearer resources with the core network (e.g., UMTS Packet Services (PS) domain, Long Term Evolution (LTE) PS data services, etc.). The application server may signal the PCRF 150 to indicate a new service flow and selecting the appropriate Quality of Service (QoS) and charging parameters. The PCRF 150 may provision this rule into a Policy and Charging Enforcement Function (PCEF) (not shown) with the appropriate traffic flow template (TFT) and QoS class of identifier (QCI), which commences the QoS and charging as specified by the application server.

The components of the EPC 100 may be implemented in one physical node or separate physical nodes. In some embodiments, Network Functions Virtualization (NFV) is utilized to virtualize any or all of the above described network node functions via executable instructions stored in one or more computer readable storage mediums (described in further detail below). A logical instantiation of the EPC network 100 may be referred to as a network slice 101. A logical instantiation of a portion of the EPC network 100 may be referred to as a network sub-slice 102 (e.g., the network sub-slice 102 is shown to include the PGW 140 and the PCRF 150).

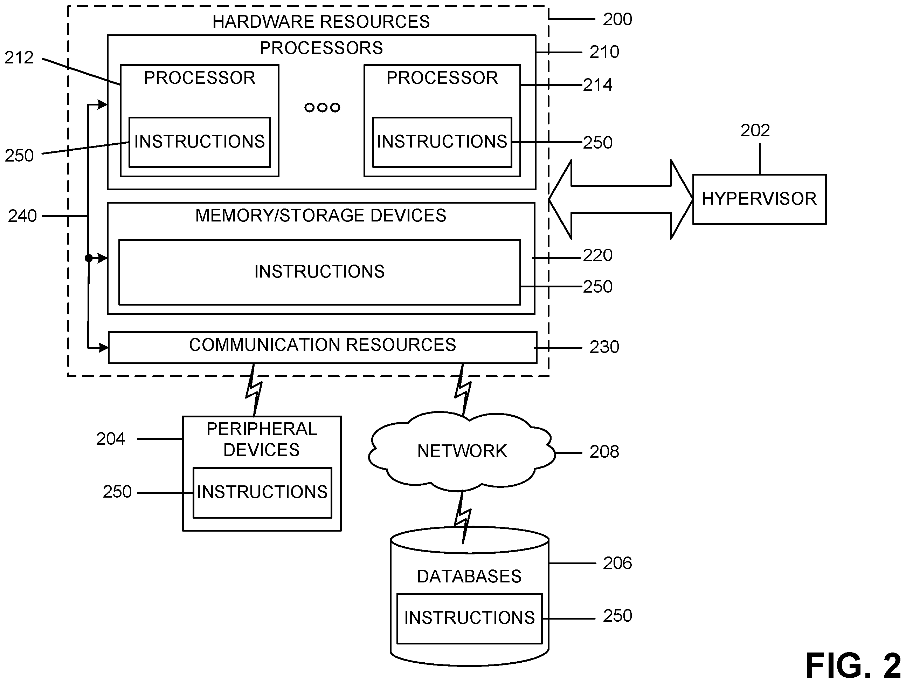

**FIG. 2** is a block diagram illustrating components, according to some example embodiments, able to read instructions from a machine-readable or computer-readable medium (e.g., a machine-readable storage medium) and perform any one or more of the methodologies discussed herein. Specifically, FIG. 2 shows a diagrammatic representation of hardware resources 200 including one or more processors (or processor cores) 210, one or more memory/storage devices 220, and one or more communication resources 230, each of which are communicatively coupled via a bus 240. For embodiments where node virtualization (e.g., NFV) is utilized, a hypervisor 202 may be executed to provide an execution environment for one or more network slices/sub-slices to utilize the hardware resources 200.

The processors 210 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 212 and a processor 214. The memory/storage devices 220 may include main memory, disk storage, or any suitable combination thereof.

The communication resources 230 may include interconnection and/or network interface components or other suitable devices to communicate with one or more peripheral devices 204 and/or one or more databases 206 via a network 208. For example, the communication resources 230 may include wired communication components (e.g., for coupling via a Universal Serial Bus (USB)), cellular communication components, Near Field Communication (NFC) components, Bluetooth^{®} components (e.g., Bluetooth^{®} Low Energy), Wi-Fi^{®} components, and other communication components.

Instructions 250 may comprise software, a program, an application, an applet, an app, or other executable code for causing at least any of the processors 210 to perform any one or more of the methodologies discussed herein. The instructions 250 may reside, completely or partially, within at least one of the processors 210 (e.g., within the processor's cache memory), the memory/storage devices 220, or any suitable combination thereof. Furthermore, any portion of the instructions 250 may be transferred to the hardware resources 200 from any combination of the peripheral devices 204 and/or the databases 206. Accordingly, the memory of processors 210, the memory/storage devices 220, the peripheral devices 204, and the databases 206 are examples of computer-readable and machine-readable media.

To insure that the VNF(s) deployed on the NFV infrastructure are able to deliver a consistent and acceptable service quality to end users, as well as to isolate and correct failure conditions at the most timely manner, virtualized resource (VR) performance measurements (PMs) can be employed. These performance measurements can reflect the way VNFs are impacted by the NFVI services, and the inherent nature of the services being offered by the NFVI, for example, CPU (Central Processing Unit), Virtual Machines, memory, Virtual Networks, etc.

In various embodiments discussed herein, end-to-end techniques, covering NM, EM, VNFM, VIM, and NFVI, can be employed to enable the Network Manager (NM) to create a PM job for collected PM data from a Hypervisor at the NFVI to monitor VNF related VR PM data, and to enable the NM to subscribe to/receive notification(s) when monitored PM data is available.

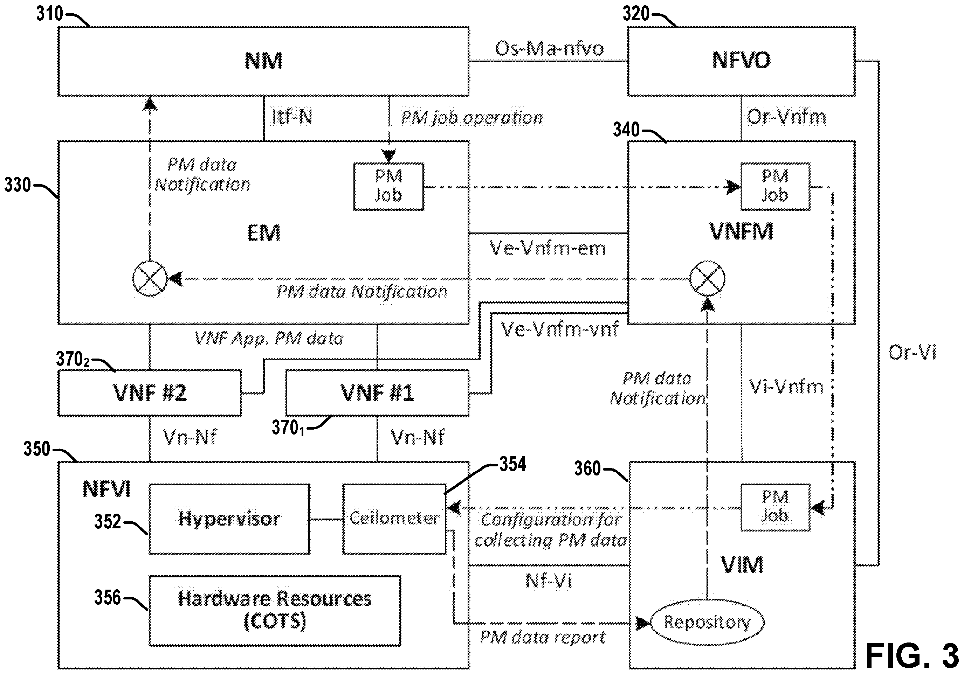

Referring to **FIG. 3****,** illustrated is a diagram of an architecture that facilitates creation of a VNF related VR PM job and/or notification that monitored PM data is available, according to various aspects described herein. In FIG. 3, an example virtual network function (VNF) related performance measurement (PM) job creation flow (and optional subsequent notification of available PM data) that can be employed in connection with various aspects described is illustrated. The system illustrated in FIG. 3 comprises a Network Manager (NM) 310, Network Function Virtualization (NFV) Orchestrator (NFVO) 320, network Element Manager (EM) 330, a set of Virtualized Network Functions (VNFs) 370ᵢ that are running on Virtualization Resources (VRs) of a NFV Infrastructure (NFVI) 350 (which can comprise a hypervisor 352 such as hypervisor 202, ceilometer (or other data collection service) 354, and hardware resources 356 such as hardware resources 200), a VNF Manager (VNFM) 340, and a Virtualized Infrastructure Manager (VIM) 360. The solid lines between these entities indicate the various reference points that facilitate data exchange between these entities, the dashed and dotted lines indicates the flow of data associated with creation of a VNF related, and the dashed lines indicate the flow of data associated with the notification of available PM data.

FIG. 3 shows a diagram illustrating a PM data collection technique for virtualized networks that can be applied according to various aspects discussed herien. When PM data is to be collected, the NM 310 can create a PM job at the EM 330 so as to determine which measurement types, on which measured resources, at which times, are to be executed. If NM 310 is to collect the VNF related Virtualized Resource (VR) PM data, EM 330 can create a PM job at VNFM 340 that contains the measurement types, and the periods for which the collection is to be performed. Then, VNFM 340 can create a PM job at VIM 360 based on the information received from EM 330. VIM 360 will configure the Ceilometer (or other data collection service) 354 in NFVI 350 to collect the VR PM data at the schedule and time period defined in the PM job. In this case, VIM 360 can act as the Openstack controller to configure the Ceilometer 354 that is to collect, transform, and save the performance measurements into a Ceilometer database.

VIM 360 can poll the Ceilometer 354 to retrieve the PM data, and then store them in a data repository. VIM 360 can then sends a notification to VNFM 340, which can forward the notification to EM 330. EM 300 can send the notification to NM 310.

Hypervisor 352 can implement one or more of the following counters for collecting the performance measurements of Virtualized Resources, such as computing resources, storage resources, networking resources, etc.

Computing resources PMs (e.g., mean CPU usage, peak CPU usage, etc.) can be associated with collecting the CPU usage of a VM (Virtual Machine). The measurement of the CPU usage can be the percentage of the total available CPU processing power in a VM. The reporting interval can be a multiple of a granularity interval.

Mean CPU Usage can be a counter that can provide the mean usage of each VM used by the VNF, and can contain multiple measurements if the VNF includes multiple VMs. This measurement can be obtained by (1) sampling the usage of the VM at the pre-defined granularity interval, (2) collecting samples in the pre-defined reporting interval, and (3) taking the arithmetic mean of the samples in the reporting interval to compute the Mean VM Usage measurement.

Peak CPU Usage can be a counter that can provide the peak usage of each VM used by the VNF, and can contain multiple measurements if the VNF includes multiple VM. This measurement can be obtained by (1) sampling the usage of the VM at the pre-defined granularity interval, (2) collecting samples in the pre-defined reporting interval, and (3) selecting the sample with the maximum value in the reporting interval to generate the Peak VM Usage measurement.

Storage resources PMs (e.g., mean memory usage, peak memory usage, etc.) can be associated with the memory usage of a VM. The measurement of the memory usage can be the percentage of the total available memory in a VM. The reporting interval can be a multiple of the granularity interval.

Mean Memory Usage can be a counter that can provide the mean usage of memory used by the VM, and can contain multiple measurements if the VNF includes multiple VM. This measurement can be obtained by (1) sampling the usage of the memory at the pre-defined granularity interval, (2) collecting samples in the pre-defined reporting interval, and (3) taking the arithmetic mean of the samples in the reporting interval to compute the Mean Memory Usage measurement.

Peak Memory Usage can be a counter that can provide the peak usage of memory used by the VM, and can contain multiple measurements if the VNF includes multiple VM. This measurement can be obtained by (1) sampling the usage of the memory at the pre-defined granularity interval, (2) collecting samples in the pre-defined reporting interval, and (3) selecting the sample with the maximum value in the reporting interval to generate the Peak Memory Usage measurement.

Networking resources PMs (e.g., number of outgoing or incoming IP packets, number of octets of outgoing or incoming IP packets, etc.) can be associated with collection of the volume of data traffic sent to or received from the VM. Data volume for a given granularity interval can be generated by (1) reading the data volume counter at the beginning of the granularity interval, (2) reading the data volume counter at the end of the granularity interval, and (3) computing the difference between these two readings to generate the data volume measurement. Measures can be taken as the counter may have wrapped around or reset to zero during the granularity period.

Number of Outgoing IP Packets can be a counter that can provide the number of outgoing IP packets transmitted by each VM used by the VNF, and can contain multiple measurements if the VNF includes multiple VM. This measurement can be obtained by (1) sampling the outgoing IP TX (transmit) counter at the beginning of the pre-defined granularity interval, (2) sampling the outgoing IP TX counter at the end of the pre-defined granularity interval, and (3) taking the arithmetic difference of the samples to compute the Number of Outgoing IP Packets measurement for the granularity interval.

Number of Incoming IP Packets can be a counter that can provide the number of incoming IP packets received by each VM used by the VNF, and can contain multiple measurements if the VNF includes multiple VM. This measurement can be obtained by (1) sampling the incoming IP RX (receive) counter at the beginning of the pre-defined granularity interval, (2) sampling the incoming IP RX counter at the end of the pre-defined granularity interval, and (3) taking the arithmetic difference of the samples to compute the Number of Incoming IP Packets measurement for the granularity interval.

Number of Octets of Outgoing IP Packets can be a counter that can provide the number of octets of outgoing IP packets transmitted by each VM used by the VNF, and can contain multiple measurements if the VNF includes multiple VM. This measurement can be obtained by (1) sampling the outgoing IP TX counter at the beginning of the pre-defined granularity interval, (2) sampling the outgoing IP TX counter at the end of the pre-defined granularity interval, and (3) taking the arithmetic difference of the samples to compute the Number of Octets of Outgoing IP Packets measurement for the granularity interval.

Number of Octets of Incoming IP Packets can be a counter that can provide the number of octets of incoming IP packets received by each VM used by the VNF, and can contain multiple measurements if the VNF includes multiple VM. This measurement can be obtained by (1) sampling the incoming IP RX counter at the beginning of the pre-defined granularity interval, (2) sampling the incoming IP RX counter at the end of the pre-defined granularity interval, and (3) taking the arithmetic difference of the samples to compute the Number of Octets of Incoming IP Packets measurement for the granularity interval.

In various aspects, techniques discussed herein can be employed in connection with end-to-end threshold creation in connection with a VNF related VR PM job, and associated actions that can be performed by an NM, EM, VNFM, VIM, and/or NFVI in connection with such threshold creation.

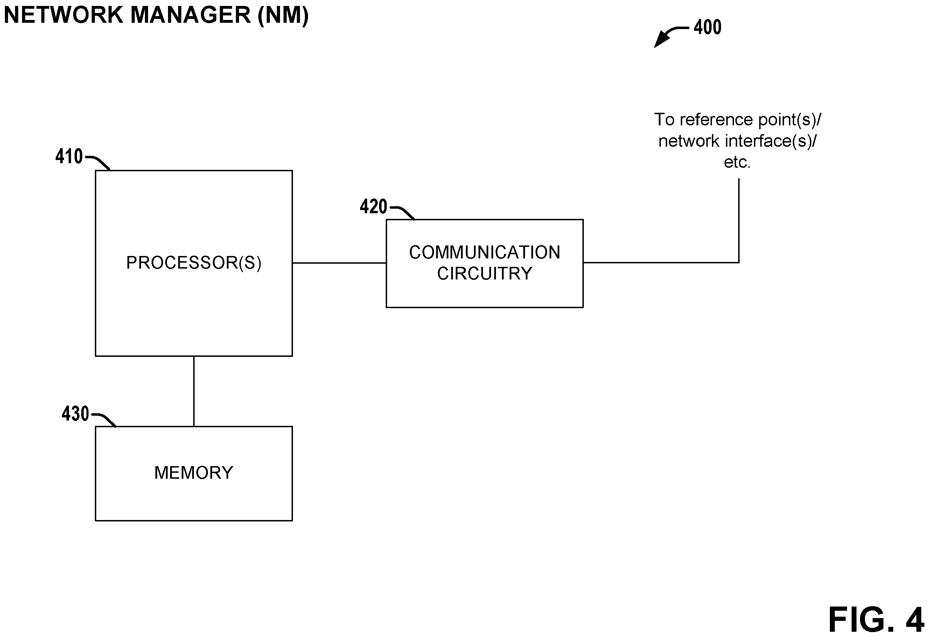

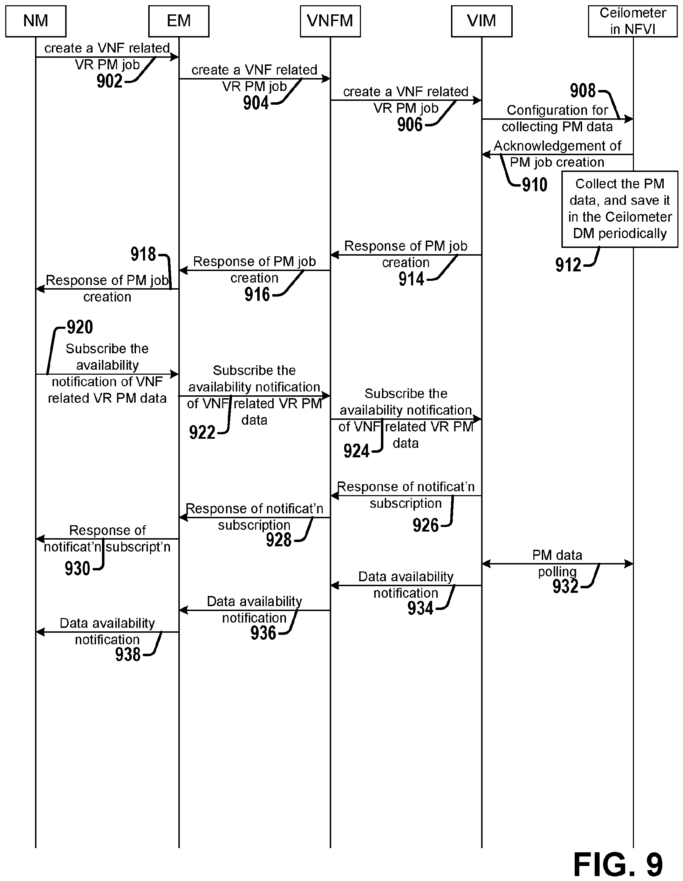

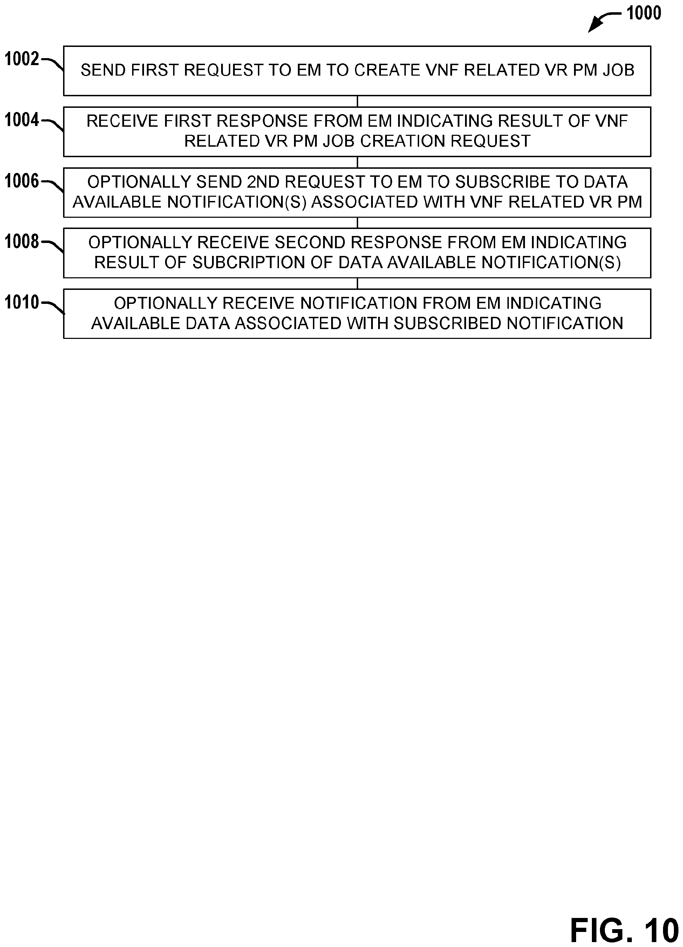

Referring to **FIG. 4****,** illustrated is a block diagram of a system 400 employable by a Network Manager (NM) that facilitates creation of a VNF related VR PM and associated operations, according to various aspects described herein. System 400 can comprise one or more processors 410 (e.g., which can comprise one or more of processor(s) 210, etc.), communication circuitry 420 (which can facilitate communication of data via one or more reference points, networks, etc., and can comprise communication resource(s) 230, etc.), and memory 430 (which can comprise any of a variety of storage mediums and can store instructions and/or data associated with at least one of the one or more processors 410 or communication circuitry 420, and can comprise memory/storage device(s) 220 and/or cache memory of processor(s) 410, etc.). In some aspects, the one or more processors 410, the communication circuitry 420, and the memory 430 can be included in a single device, while in other aspects, they can be included in different devices, such as part of a distributed architecture. As described in greater detail below, system 400 can be employed by a NM to perform one or more operations (e.g., those described herein in connection with FIGS. 9 and 10, NM 310, etc.) that can facilitate end-to-end creation of a VNF related VR PM.

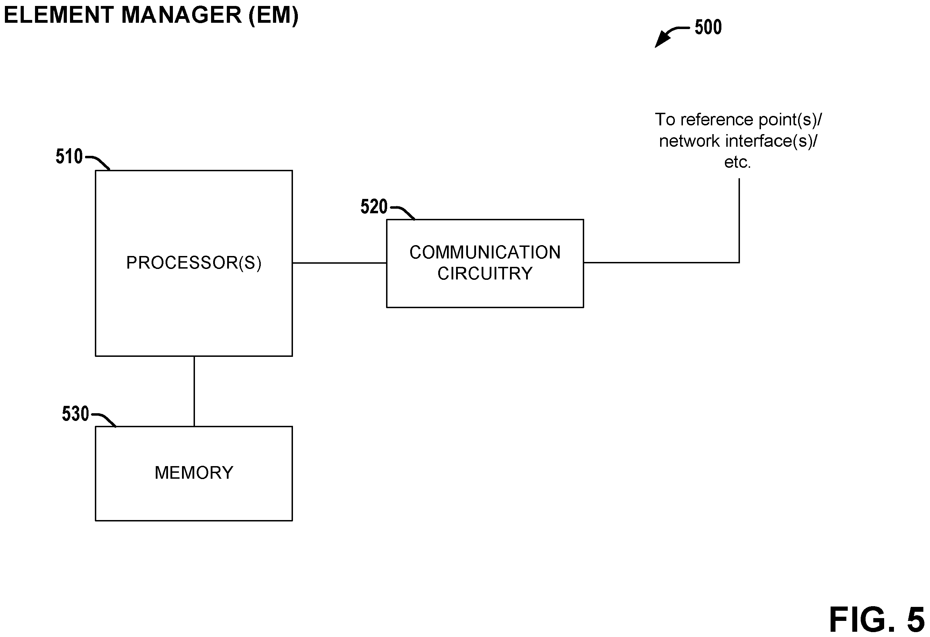

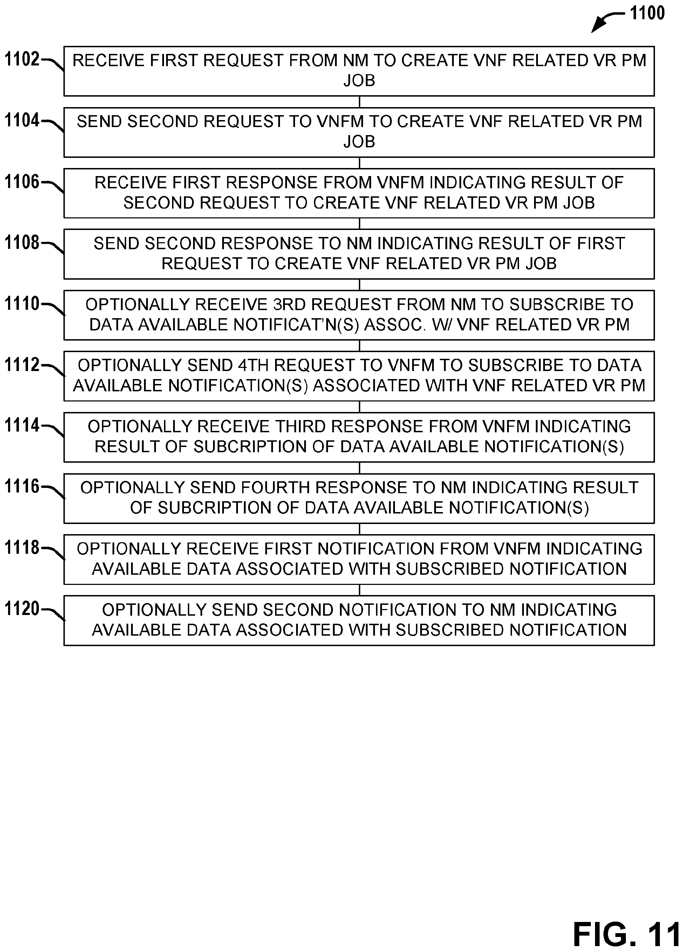

Referring to **FIG. 5****,** illustrated is a block diagram of a system 500 employable by an Element Manager (EM) that facilitates creation of a VNF related VR PM and associated operations, according to various aspects described herein. System 500 can comprise one or more processors 510 (e.g., which can comprise one or more of processor(s) 210, etc.), communication circuitry 520 (which can facilitate communication of data via one or more reference points, networks, etc., and can comprise communication resource(s) 230, etc.), and memory 530 (which can comprise any of a variety of storage mediums and can store instructions and/or data associated with at least one of the one or more processors 510 or communication circuitry 520, and can comprise memory/storage device(s) 220 and/or cache memory of processor(s) 510, etc.). In some aspects, the one or more processors 510, the communication circuitry 520, and the memory 530 can be included in a single device, while in other aspects, they can be included in different devices, such as part of a distributed architecture. As described in greater detail below, system 500 can be employed by an EM to perform one or more operations (e.g., those described herein in connection with FIGS. 9 and 11, EM 330, etc.) that can facilitate end-to-end creation of a VNF related VR PM.

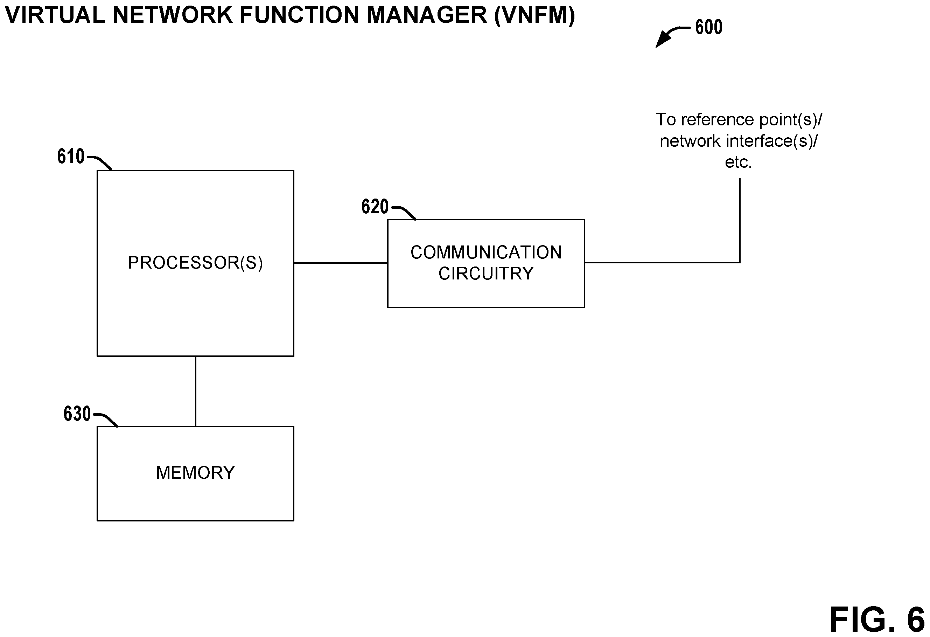

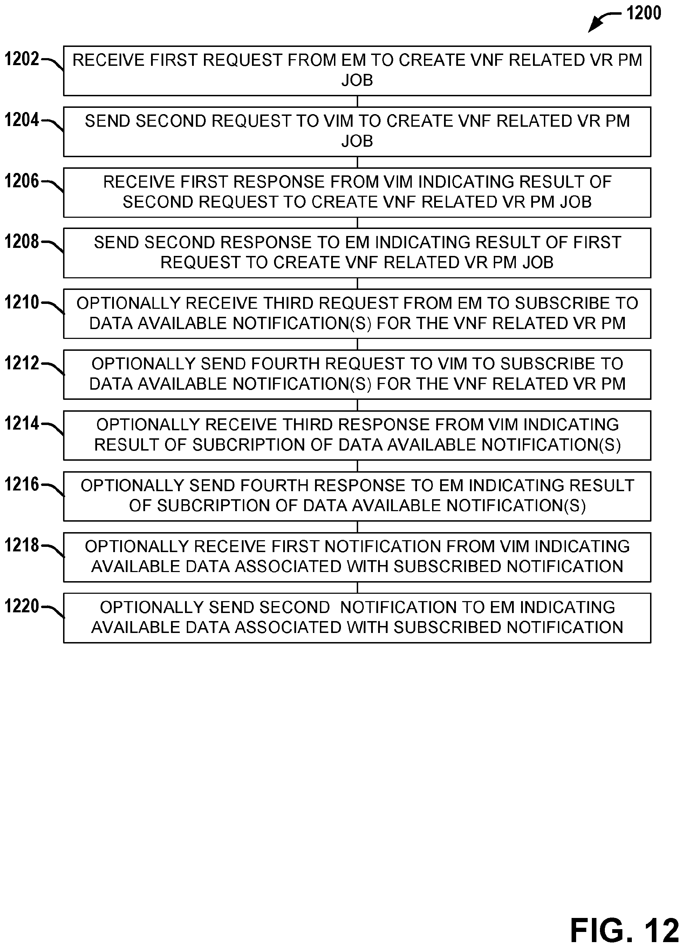

Referring to **FIG. 6****,** illustrated is a block diagram of a system 600 employable by a Virtual Network Function Manager (VNFM) that facilitates creation of a VNF related VR PM and associated operations, according to various aspects described herein. System 600 can comprise one or more processors 610 (e.g., which can comprise one or more of processor(s) 210, etc.), communication circuitry 620 (which can facilitate communication of data via one or more reference points, networks, etc., and can comprise communication resource(s) 230, etc.), and memory 630 (which can comprise any of a variety of storage mediums and can store instructions and/or data associated with at least one of the one or more processors 610 or communication circuitry 620, and can comprise memory/storage device(s) 220 and/or cache memory of processor(s) 610, etc.). In some aspects, the one or more processors 610, the communication circuitry 620, and the memory 630 can be included in a single device, while in other aspects, they can be included in different devices, such as part of a distributed architecture. As described in greater detail below, system 600 can be employed by a VNFM to perform one or more operations (e.g., those described herein in connection with FIGS. 9 and 12, VNFM 340, etc.) that can facilitate end-to-end creation of a VNF related VR PM.

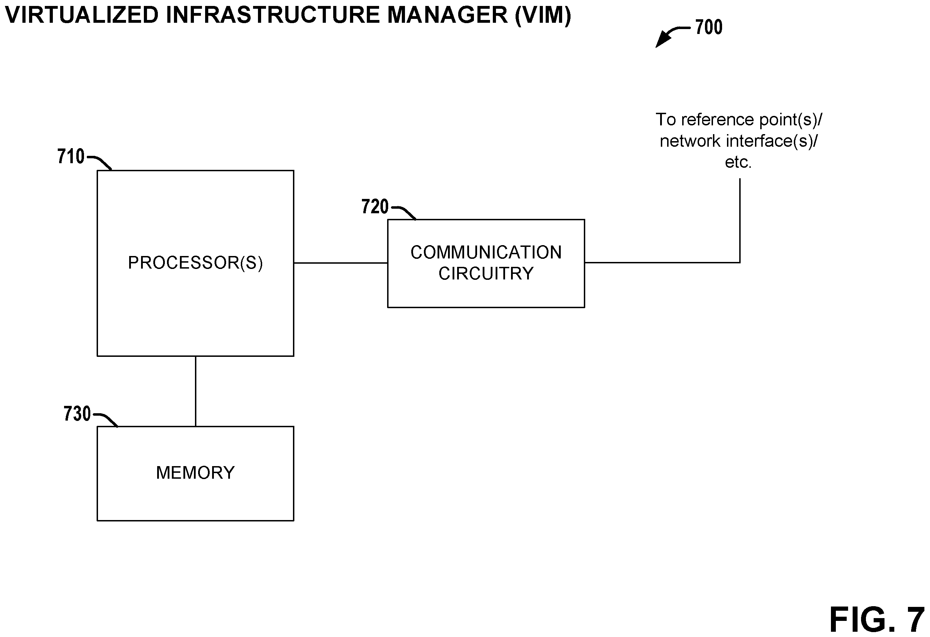

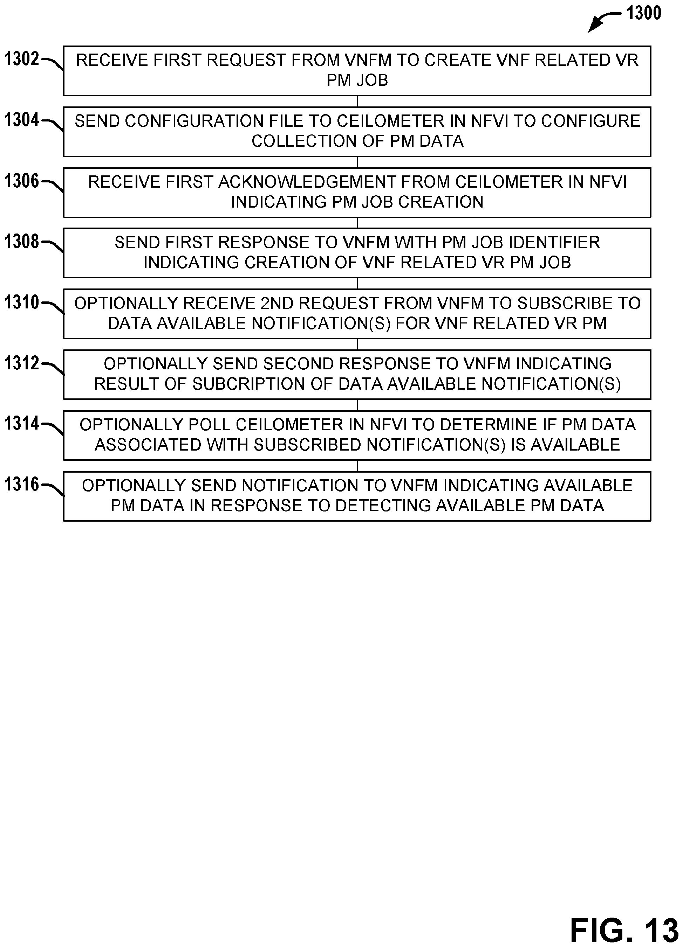

Referring to **FIG. 7****,** illustrated is a block diagram of a system 700 employable by a Virtualized Infrastructure Manager (VIM) that facilitates creation of a VNF related VR PM and associated operations, according to various aspects described herein. System 700 can comprise one or more processors 710 (e.g., which can comprise one or more of processor(s) 210, etc.), communication circuitry 720 (which can facilitate communication of data via one or more reference points, networks, etc., and can comprise communication resource(s) 230, etc.), and memory 730 (which can comprise any of a variety of storage mediums and can store instructions and/or data associated with at least one of the one or more processors 710 or communication circuitry 720, and can comprise memory/storage device(s) 220 and/or cache memory of processor(s) 710, etc.). In some aspects, the one or more processors 710, the communication circuitry 720, and the memory 730 can be included in a single device, while in other aspects, they can be included in different devices, such as part of a distributed architecture. As described in greater detail below, system 700 can be employed by a VIM to perform one or more operations (e.g., those described herein in connection with FIGS. 9 and 13, VIM 360, etc.) that can facilitate end-to-end creation of a VNF related VR PM.

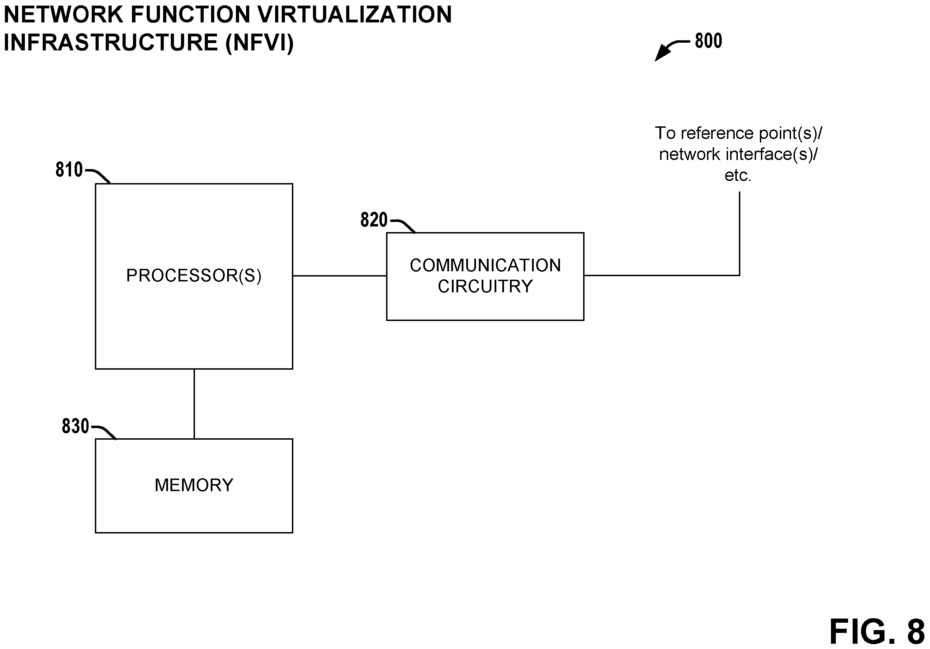

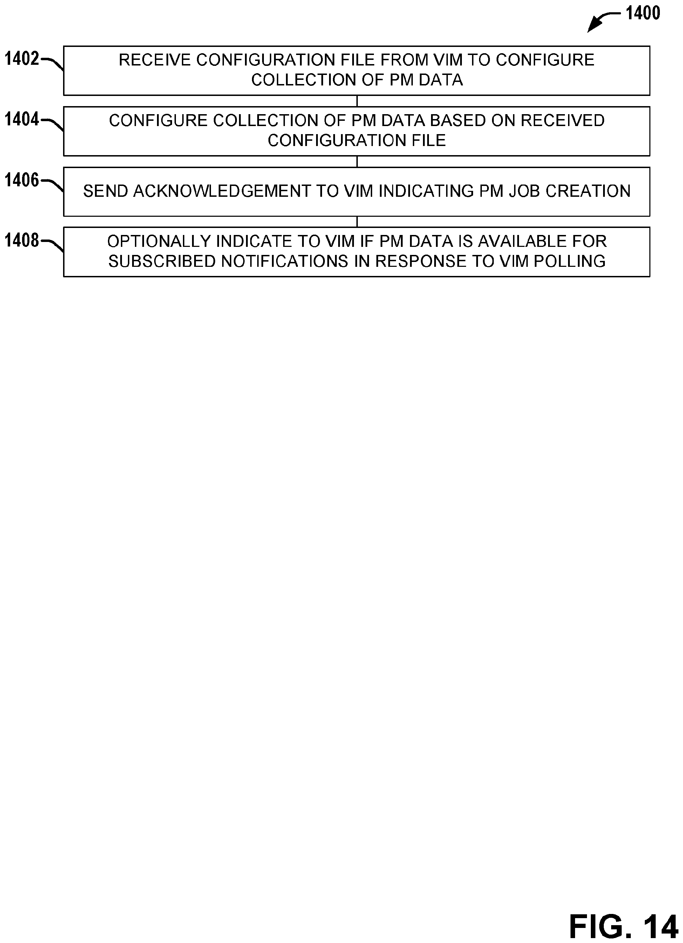

Referring to **FIG. 8****,** illustrated is a block diagram of a system 800 employable by a Network Function Virtualization Infrastructure (NFVI) that facilitates creation of a VNF related VR PM and associated operations, according to various aspects described herein. System 800 can comprise one or more processors 810 (e.g., which can comprise one or more of processor(s) 210, etc.), communication circuitry 820 (which can facilitate communication of data via one or more reference points, networks, etc., and can comprise communication resource(s) 230, etc.), and memory 830 (which can comprise any of a variety of storage mediums and can store instructions and/or data associated with at least one of the one or more processors 810 or communication circuitry 820, and can comprise memory/storage device(s) 220 and/or cache memory of processor(s) 810, etc.). In some aspects, the one or more processors 810, the communication circuitry 820, and the memory 830 can be included in a single device, while in other aspects, they can be included in different devices, such as part of a distributed architecture. As described in greater detail below, system 600 can be employed by a NFVI to perform one or more operations (e.g., those described herein in connection with FIGS. 9 and 14, NFVI 350, etc.) that can facilitate end-to-end creation of a VNF related VR PM.

Referring to **FIG. 9****,** illustrated is a flow diagram showing an example method that facilitates creation of a PM job to monitor one or more VR performance measurements of a VNF and associated actions, according to various aspects described herein. In various aspects, techniques described herein can be employed to perform VNF related VR PM creation operations, subscription(s) to notification(s) of PM data being available, and notification(s) that subscribed data is available. The flow in FIG. 9 shows an example scenario involving a PM data notification procedure that describes how PM jobs can be created to collect VNF related VR performance measurements, and a notification can be generated when a performance measurement is collected. Acts 902-918 relate to creation of a VR PM job and associated data collection. Acts 920-930 relate to subscription to data availability notifications associated with the VNF related VR PM. Acts 932-938 relate to providing a data availability notification associated with the VNF related VR PM.

At 902, NM can send (e.g., via communication circuitry 420) a request (e.g., generated by processor(s) 410) to EM (e.g., via the Itf-N reference point) to create a measurement job to collect the VNF related VR PM data. The job (e.g., as generated by processor(s) 410) can be defined by parameters such as the following: (a) iOCName (information object class (IOC) name, which can specify one Managed Entity class name) and iOCInstanceList (IOC instance list, which can specify the list of DNs of ManagedEntity instances whose measurementType(s) are to be collected), which can be object identifiers that can identify the VNF and VM where the measurements are to be collected; (b) measurementCategoryList (measurement category list, which can specify the corresponding name of measurementType (measurement type) to be measured), which can include the MeasuredAttribute (measured attribute, which can represent the name of the measurementType of the related ManagedEntity (managed entity) instance whose value is to be monitored and collected) and MeasurementTypeName (measurement type name, which can identify a name of one measurement type whose value is being collected and monitored) IOCs that can define the type of measurement(s) to be collected (e.g., Mean CPU Usage, Peak Memory Usage, Number of Octets of Outgoing IP Packets, Number of Outgoing IP Packets, etc.); (c) granularityPeriod (granularity period, which can specify the period between two successive measurements or readings of a threshold value), which can define the granularity interval for the measurements; and (d) reportingPeriod (reporting period, which can specify the period between two successive notifications, such as of a file being ready, or an error in file preparation), which can define the reporting interval for the measurements. The EM can receive this request via communication circuitry 520 and process this request via processor(s) 510.

At 904, the EM (e.g., via processor(s) 510) can use the iOCName and iOCInstanceList to identify the list of VNF instances where the PM job is to be created, and can send (e.g., via communication circuitry 520) a request (e.g., generated by processor(s) 510) with parameters such as the following to the corresponding VNFM (e.g., via the Ve-Vnfm-em reference point) to create a PM job: (a) sourceSelector (source selector, which can define the VNF(s) and/or VNFC(s) for which performance information is requested to be collected), which can identifies the VNF and VM where the measurements are to be collected, and can be mapped from iOCName, iOCInstanceList; (b) performanceMetric: (performance metric, which can define the type(s) of performance metric(s) for the specified VNF), which can identify the type of measurements to be collected (e.g., Mean CPU Usage, Peak Memory Usage, Number of Octets of Outgoing IP Packets, Number of Outgoing IP Packets, etc.), and can be mapped from measurementCategoryList; (c) collectionPeriod (collection period, which can specify the periodicity at which the VNFM will collect performance informance), which can be mapped from granularityPeriod; and (d) reportingPeriod (reporting period, which can specify the periodicity at which the VNFM will report to the EM about performance information), which can be mapped from the reportingPeriod of the request sent from the NM. The VNFM can receive this request via communication circuitry 620 and process this request via processor(s) 610.

At 906, the VNFM can send (e.g., via communication circuitry 620) a request (e.g., generated by processor(s) 610) to the VIM (e.g., via the Vi-Vnfm reference point) to create a PM job to collect the VR performance measurements (e.g., a VNF related VR PM job). This request can be based on and can comprise parameters similar to the request received at the VNFM from the EM, such as sourceSelector (or resourceSelector), performanceMetric, collectionPeriod, reportingPeriod, etc. The VIM can receive this request via communication circuitry 720 and process this request via processor(s) 710.

At 908, VIM can send (e.g., via communication circuitry 720) one or more configuration files (e.g., a pipeline.yaml Ceilometer configuration file, for example, generated by processor(s) 710) to a data collection service (e.g., Ceilometer) in the NFVI (e.g., via the Nf-Vi reference point) to configure the collection of one or more PM measurements (e.g., Mean CPU usage, etc.). The NFVI can receive the configuration file(s) via communication circuitry 820 and process the configuration file(s) via processor(s) 810 (e.g., by creating one or more VNF related VR PM jobs to collect the one or more PM measurements). The configuration file(s) (e.g., pipeline.yaml) of the data collection service (e.g., Ceilometer) can include configuration files for collecting mean and/or peak CPU usage (e.g., Vcpu_util, etc.), memory usage (e.g., Mem_util, etc.), and/or incoming/outgoing IP traffic (e.g., Packet_util, etc.). The following is an example of a pipeline.yaml Ceilometer configuration file for collecting the Mean CPU usage (e.g., Vcpu_util) that can be employed in various aspects discussed herein:

```
 --- Vcpu_util
 sources:
 - name: cpu_source
  interval: 30
  meters:
    - "cpu"
  sinks:
    - cpu_sink
    - vcpu_sink
 - name: vcpu_sink
  transformers:
    - name: "rate_of_change"
     parameters:
       target:
         name: "vcpu_util"
         unit: "%"
         type: "gauge"
         scale: "100.0 / (10**9 * (resource_metadata.vcpu_number or 1))"
  publishers:
    - notifier://
```

At 910, the data collection service (e.g., Ceilometer) in the NFVI can send (e.g., via communication circuitry 820) an acknowledgement (e.g., generated by processor(s) 810) to the VIM (e.g., via the Nf-Vi reference point), which can indicate, for example, a start and/or completion of configuration of the collection of one or more PM measurements (e.g., a start and/or completion of creation of the one or more VNF related VR PM jobs). The VIM can receive this acknowledgement via communication circuitry 720 and process this acknowledgement via processor(s) 710.

At 912, after the data collection service (e.g., Ceilometer) configuration file(s) (pipeline.yaml configuration file) has/have been successfully loaded (e.g., into memory 830 by processor(s) 810), the data collection service (e.g., Ceilometer) in the NFVI can collect (e.g., via processor(s) 810) VR PM data periodically at the interval defined in the PM job and save it (e.g., via processor(s) 810) in a data collection service (e.g., Ceilometer) Database (e.g., stored in memory 830).

At 914, the VIM can send (e.g., via communication circuitry 720) a response (e.g., generated by processor(s) 710) to the VNFM (e.g., via the Vi-Vnfm reference point) with the PM job identifier (e.g., via a pmJobld (PM job ID) parameter that can identify the PM job (being created, deleted, etc.), etc.). The VNFM can receive this response via communication circuitry 620 and process this response via processor(s) 610.

At 916, the VNFM can send (e.g., via communication circuitry 620) a response (e.g., generated by processor(s) 610) to the EM (e.g., via the Ve-Vnfm-em reference point) with the identifier of the PM job being created. The EM can receive this response via communication circuitry 520 and process this response via processor(s) 510.

At 918, the EM can send (e.g., via communication circuitry 520) a response (e.g., generated by processor(s) 510) to the NM (e.g., via the Itf-N reference point) with a jobld (job identifier) that can be mapped from the pmJobld, along with a status (e.g., wherein status = 'Success'). The NM can receive this response via communication circuitry 420 and process this response via processor(s) 410.

At 920, the NM can send (e.g., via communication circuitry 420) a request (e.g., generated by processor(s) 410) to the EM (e.g., via the Itf-N reference point) to subscribe to one or more VNF related VR PM data available notifications. The EM can receive this request via communication circuitry 520 and process this request via processor(s) 510.

At 922, the EM can send (e.g., via communication circuitry 520) a request (e.g., generated by processor(s) 510) to VNFM (e.g., via the Ve-Vnfm-em reference point) to subscribe the VNF related VR PM data available notification(s), wherein the request can comprise a filter parameter (e.g., an input filter that can be used for selecting notifications, such as on resource (such as VNF/VNFC (VNF Component)), type of notification, attribute of the notification, etc.). The VNFM can receive this request via communication circuitry 620 and process this request via processor(s) 610.

At 924, the VNFM can send (e.g., via communication circuitry 620) a request (e.g., generated by processor(s) 610) to the VIM (e.g. via the Nf-Vi reference point) to subscribe the VNF related VR PM data available notification(s), wherein the request can comprise the filter parameter. The VIM can receive this request via communication circuitry 720 and process this request via processor(s) 710.

At 926, the VIM can send (e.g., via communication circuitry 720) a response (e.g., generated by processor(s) 710) with a subscriptionld (subscription identifier, which can identify the subscription realized) parameter to the VNFM (e.g., via the Vi-Vnfm reference point) to indicate the subscribed VNF related VR PM data available notification(s). The VNFM can receive this response via communication circuitry 620 and process this response via processor(s) 610.

At 928, the VNFM can send (e.g., via communication circuitry 620) a response (e.g., generated by processor(s) 610) with the subscriptionld parameter to the EM (e.g., via the Ve-Vnfm-em reference point) to indicate the subscribed VNF related VR PM data available notification(s). The EM can receive this response via communication circuitry 520 and process this response via processor(s) 510.

At 930, the EM can send (e.g., via communication circuitry 520) a response (e.g., generated by processor(s) 510) to the NM (e.g., via the Itf-N reference point) to indicate the subscribed VNF related VR PM data available notification(s). The NM can receive this response via communication circuitry 420 and process this response via processor(s) 410.

At 932, the VIM (e.g., via communication circuitry 720) can poll the data collection service (e.g., Ceilometer) at the NFVI (e.g., via the Nf-Vi reference point) to retrieve the PM data (e.g., PM data associated with subscribed VNF related VR PM data available notification(s)). The NFVI can receive this polling via communication circuitry 820 and process this polling via processor(s) 810 (e.g., by determining available data associated with the polling, which can be provided to the VIM, which can store (e.g., via processor(s) 710) PM data in a data repository (e.g., of memory 730).

At 934, when VIM detects (e.g., via processor(s) 710) the PM data is available, VIM can send (e.g., via communication circuitry 720) a notification (e.g., generated by processor(s) 710) comprising an objectlnstanceld (object instance identifier, which can identify the object instance(s) (e.g., VNF instance(s), VNFC instance(s)) for which performance information is requested to be collected) to the VNFM (e.g., via the Vi-Vnfm reference point), which can indicate the VNF related VR PM data identified by the objectlnstanceld parameter is available. The VNFM can receive this notification via communication circuitry 620 and process this notification via processor(s) 610.

At 936, the VNFM can send (e.g., via communication circuitry 620) a notification (e.g., generated by processor(s) 610) comprising the objectlnstanceld to the EM (e.g., via the Ve-Vnfm-em reference point), which can indicate the VNF related VR PM data identified by the objectlnstanceld parameter is available. The EM can receive this notification via communication circuitry 520 and process this notification via processor(s) 510.

At 938, the EM can send (e.g., via communication circuitry 520) a notification (e.g., generated by processor(s) 510) comprising the objectlnstanceld to the NM (e.g., via the Itf-N reference point), which can indicate the VNF related VR PM data identified by the objectlnstanceld parameter is available. The NM can receive this notification via communication circuitry 420 and process this notification via processor(s) 410.

Referring to **FIG. 10****,** illustrated is a flow diagram of a method 1000 that facilitates creation of a VNF related VR PM job and associated operations by a NM according to various aspects described herein. In some aspects, method 1000 can be performed at a NM. In other aspects, a machine readable medium can store instructions associated with method 1000 that, when executed, can cause a NM to perform the acts of method 1000.

At 1002, a first request can be sent to an EM to create a VNF related VR PM job.

At 1004, a first response can be received from the EM indicating a result of the first request to create the VNF related VR PM job.

At 1006, optionally, a second request can be sent to the EM to subscribe to one or more data available notifications associated with one or more VNF related VR PMs.

At 1008, optionally, a second response can be received from the EM indicating the result of the subscription(s) to data available notification(s).

At 1010, optionally, one or more notifications can be received from the EM indicating available data associated with one or more subscribed notifications.

Additionally or alternatively, method 1000 can include one or more other acts described above in connection with system 400.

Referring to **FIG. 11****,** illustrated is a flow diagram of a method 1100 that facilitates creation of a VNF related VR PM job and associated operations by an EM according to various aspects described herein. In some aspects, method 1100 can be performed at an EM. In other aspects, a machine readable medium can store instructions associated with method 1100 that, when executed, can cause an EM to perform the acts of method 1100.

At 1102, a first request can be received from a NM to create a VNF related VR PM job.

At 1104, a second request can be sent to a VNFM to create the VNF related VR PM job.

At 1106, a first response can be received from the VNFM indicating a result of the second request to create the VNF related VR PM job.

At 1108, a second response can be sent to the NM indicating the result of the first request to create the VNF related VR PM job.

At 1110, optionally, a third request can be received from the NM to subscribe one or more data available notifications associated with one or more VNF related VR PMs.

At 1112, optionally, a fourth request can be sent to the VNFM to subscribe one or more data available notifications associated with one or more VNF related VR PMs.

At 1114, optionally, a third response can be received from the VNFM indicating a result of the fourth request to subscribe the one or more data available notifications.

At 1116, optionally, a fourth response can be sent to the NM indicating a result of the third request to subscribe the one or more data available notifications.

At 1118, optionally, a first notification can be received from the VNFM indicating available data associated with one or more subscribed notifications.

At 1120, optionally, a second notification can be sent to the NM indicating available data associated with one or more subscribed notifications.

Additionally or alternatively, method 1100 can include one or more other acts described above in connection with system 500.

Referring to **FIG. 12****,** illustrated is a flow diagram of a method 1200 that facilitates creation of a VNF related VR PM job and associated operations by a VNFM according to various aspects described herein. In some aspects, method 1200 can be performed at a VNFM. In other aspects, a machine readable medium can store instructions associated with method 1200 that, when executed, can cause a VNFM to perform the acts of method 1200.

At 1202, a first request can be received from an EM to create a VNF related VR PM job.

At 1204, a second request can be sent to a VIM to create the VNF related VR PM job.

At 1206, a first response can be received from the VIM indicating a result of the second request to create the VNF related VR PM job.

At 1208, a second response can be sent to the EM indicating the result of the first request to create the VNF related VR PM job.

At 1210, optionally, a third request can be received from the EM to subscribe one or more data available notifications associated with one or more VNF related VR PMs.

At 1212, a fourth request can be sent to the VIM to subscribe one or more data available notifications associated with one or more VNF related VR PMs.

At 1214, a third response can be received from the VIM indicating a result of the fourth request to subscribe one or more data available notifications associated with one or more VNF related VR PMs.

At 1216, a fourth response can be sent to the EM indicating a result of the third request to subscribe one or more data available notifications associated with one or more VNF related VR PMs.

At 1218, optionally, a first notification can be received from the VIM indicating available data associated with one or more subscribed notifications.

At 1220, optionally, a second notification can be sent to the EM indicating available data associated with one or more subscribed notifications.

Additionally or alternatively, method 1200 can include one or more other acts described above in connection with system 600.

Referring to **FIG. 13****,** illustrated is a flow diagram of a method 1300 that facilitates creation of a VNF related VR PM job and associated operations by a VIM according to various aspects described herein. In some aspects, method 1300 can be performed at a VIM. In other aspects, a machine readable medium can store instructions associated with method 1300 that, when executed, can cause a VIM to perform the acts of method 1300.

At 1302, a first request can be received from a VNFM to create a VNF related VR PM job.

At 1304, a configuration file can be sent to a data collection service (e.g., Ceilometer) in a NFVI to configure collection of PM data.

At 1306, a first acknowledgement can be received from the data collection service in the NFVI indicating creation of the VNF related VR PM job.

At 1308, a first response can be sent to the VNFM (e.g., comprising a PM job identifier of the VNF related VR PM job) that can indicate creation of the VNF related VR PM job.

At 1310, optionally, a second request can be received from the VNFM to subscribe one or more data available notifications associated with one or more VNF related VR PMs.

At 1312, a second response can be sent to the VNFM indicating a result of the second request to subscribe one or more data available notifications associated with one or more VNF related VR PMs.

At 1314, optionally, the data collection service (e.g., Ceilometer) in the NFVI can be polled to determine if PM data is available with one or more subscribed data available notifications.

At 1316, optionally, a notification can be sent to the VNFM indicating available PM data in response to detecting that PM data associated with one or more subscribed notifications is available.

Additionally or alternatively, method 1300 can include one or more other acts described above in connection with system 700.

Referring to FIG. 14, illustrated is a flow diagram of a method 1400 that facilitates creation of a VNF related VR PM job and associated operations by a NFVI according to various aspects described herein. In some aspects, method 1400 can be performed at a NFVI. In other aspects, a machine readable medium can store instructions associated with method 1400 that, when executed, can cause a NFVI to perform the acts of method 1400.

At 1402, a configuration file can be received from a VIM to configure collection of PM data.

At 1404, collection of PM data can be configured (e.g., via creation of a PM job) based on the received configuration file.

At 1406, a first acknowledgement can be sent to the VIM indicating creation of the PM job.

At 1408, optionally, in response to polling by the VIM, an indication can be made to the VIM whether PM data is available in connection with one or more subscribed data available notifications.

Additionally or alternatively, method 1400 can include one or more other acts described above in connection with system 800.

## Claims

1. A Virtualized Infrastructure Manager, VIM, (360) comprising:
a memory; and
one or more processors configured to:
receive a request from a Virtual Network Function, VNF, Manager, VNFM, (340) to create a VNF related Virtualization Resource, VR, Performance Measurement, PM, job;
send one or more configuration files to a data collection service in a Network Function Virtualization Infrastructure, NFVI, (350) to configure a collection of one or more PM measurements;
receive an acknowledgement from the NFVI (350) in response to the one or more configuration files; and
send a response to the VNFM (340), wherein the response indicates a job identifier of the VNF related VR PM job.

2. The VIM (360) of claim 1, wherein the one or more processors are further configured to:
receive a second request from the VNFM (340) to subscribe to one or more data available notifications associated with the VNF related VR PM job; and
send a second response to the VNFM (340) to indicate that the one or more data available notifications have been subscribed, wherein the second response comprises one or more subscription identifier, subscriptionId, parameters that identify the one or more data available notifications.

3. The VIM (360) of claim 2, wherein the one or more processors are further configured to:
poll the data collection service at the NFVI (350) to retrieve PM data associated with the one or more data available notifications; and
send a notification to the VNFM (340) that indicates that the retrieved PM data is available, wherein the notification comprises an object instance identifier, objectInstanceId, that identifies one or more object instances associated with the retrieved PM data.

4. The VIM (360) of any of claims 1-3, wherein the data collection service is a ceilometer.

5. The VIM (360) of claim 4, wherein the one or more configuration files comprises a pipeline.yaml configuration file.

6. The VIM (360) of any of claims 1-5, wherein the response comprises a PM job identifier, pmJobId, parameter that indicates the job identifier of the VNF related VR PM job.

7. The VIM (360) of any of claims 1-6, wherein the request comprises a source selector, sourceSelector, parameter that defines resources for which performance information is to be collected in connection with the VNF related VR PMjob.

8. The VIM (360) of claim 7, wherein the request comprises one or more of: a performance metric, performanceMetric, parameter that defines one or more performance metrics types for the resources; a collection period, collectionPeriod, parameter that specifies a collection periodicity at which performance information will be collected; or a reporting period, reportingPeriod, parameter that specifies a reporting periodicity at which performance information will be reported.

9. The VIM (360) of any of claims 1-8, wherein the collection of one or more PM measurements comprise a mean central processing unit, CPU, usage, a peak CPU usage, a mean memory usage, a peak memory usage, a number of incoming Internet protocol, IP, packets, a number of outgoing IP packets, a number of octets of incoming IP packets, or a number of octets of outgoing IP packets.

10. A Network Function Virtualization Infrastructure, NFVI, (350) comprising:
a memory; and
one or more processors configured to:
receive, from a Virtualized Infrastructure Manager, VIM, (360) one or more configuration files for configuring a collection of one or more Performance Measurement, PM, measurements associated with a Virtual Network Function, VNF, related Virtualization Resource, VR;
load the one or more configuration files;
send an acknowledgement to the VIM (360) in response to the one or more configuration files;
periodically collect VR PM data based on an interval defined in the one or more configuration files; and
store the periodically collected VR PM data in a database of a data collection service, wherein the memory is configured to store the database of the data collection service.

11. The NFVI (350) of claim 10, wherein the data collection service is a ceilometer.

12. The NFVI (350) of claim 11, wherein the one or more configuration files comprise a pipeline.yaml configuration file.

13. The NFVI (350) of any of claims 10-12, wherein the one or more processors are further configured to:
receive polling from the VIM (360) in connection with the VNF related VR; and
send at least a subset of the periodically collected VR PM data to the VIM (360) in response to the polling.

14. The NFVI (350) of any of claims 10-13, wherein the collection of one or more PM measurements comprise one or more of: one or more computing resources PM measurements, one or more storage resources PM measurements, or one or more networking resources PM measurements.

15. The NFVI (350) of claim 14, wherein the collection of one or more PM measurements comprise a mean central processing unit, CPU, usage, a peak CPU usage, a mean memory usage, a peak memory usage, a number of incoming Internet protocol, IP, packets, a number of outgoing IP packets, a number of octets of incoming IP packets, or a number of octets of outgoing IP packets.

## Patentansprüche

1. Virtualized Infrastructure Manager, VIM, (360), umfassend:
einen Speicher; und
einen oder mehrere Prozessoren, die konfiguriert sind zum:
Empfangen einer Anforderung von einem Virtual Network Function, VNF, Manager, VNFM, (340), um einen VNF-bezogenen Virtualization Resource, VR, Performance Measurement, PM, Auftrag zu erzeugen;
Senden einer oder mehrerer Konfigurationsdateien an einen Datensammeldienst in einer Network Function Virtualization Infrastructure, NFVI, (350), um eine Sammlung von einer oder mehreren PM-Messungen zu konfigurieren;
Empfangen einer Bestätigung von der NFVI (350) als Antwort auf die eine oder mehrere Konfigurationsdateien; und
Senden einer Antwort an den VNFM (340), wobei die Antwort eine Auftragskennung des VNF-bezogenen VR PM-Auftrags angibt.

2. VIM (360) nach Anspruch 1, wobei der eine oder die mehreren Prozessoren ferner konfiguriert sind zum:
Empfangen einer zweiten Anforderung von dem VNFM (340), um eine oder mehrere Datenverfügbarkeitsbenachrichtigungen, die mit dem VNF-bezogenen VR-PM-Auftrag verbunden sind, zu abonnieren; und
Senden einer zweiten Antwort an den VNFM (340), um anzuzeigen, dass die eine oder die mehreren datenverfügbaren Benachrichtigungen abonniert wurden, wobei die zweite Antwort einen oder mehrere Abonnement-Identifizierungsparameter, subscriptionId, die die eine oder die mehreren datenverfügbaren Benachrichtigungen identifizieren, umfasst.

3. VIM (360) nach Anspruch 2, wobei der eine oder die mehreren Prozessoren ferner konfiguriert sind zum:
Abfragen des Datensammeldienstes am NFVI (350), um PM-Daten, die mit der einen oder den mehreren datenverfügbaren Benachrichtigungen verbunden sind, abzurufen; und
Senden einer Benachrichtigung an den VNFM (340), die anzeigt, dass die abgerufenen PM-Daten verfügbar sind, wobei die Benachrichtigung einen Objektinstanz-Identifikator, objectInstanceId, umfasst, der eine oder mehrere Objektinstanzen identifiziert, die mit den abgerufenen PM-Daten verbunden sind.

4. VIM (360) nach einem der Ansprüche 1 bis 3, wobei der Datenerfassungsdienst ein Ceilometer ist.

5. VIM (360) nach Anspruch 4, wobei die eine oder mehreren Konfigurationsdateien eine Konfigurationsdatei pipeline.yaml umfassen.

6. VIM (360) nach einem der Ansprüche 1 bis 5, wobei die Antwort einen PM-Auftrag-Identifizierungsparameter, pmJobId, der den Auftrag-Identifizierer des VNF-bezogenen VR-PM-Auftrags angibt, umfasst.

7. VIM (360) nach einem der Ansprüche 1 bis 6, wobei die Anforderung einen Quellenselektor, sourceSelector, Parameter, der Ressourcen definiert, für die Leistungsinformationen in Verbindung mit dem VNF-bezogenen VR-PM-Auftrag gesammelt werden sollen, umfasst.

8. VIM (360) nach Anspruch 7, wobei die Anforderung eines oder mehrere der folgenden Elemente umfasst: einen Performance-Metrik-Parameter (performanceMetric), der einen oder mehrere Performance-Metrik-Typen für die Ressourcen definiert; einen Erfassungszeitraum (collectionPeriod), der eine Erfassungsperiodizität, mit der Performance-Informationen erfasst werden, angibt; oder einen Berichtszeitraum (reportingPeriod), der eine Berichtsperiodizität angibt, mit der Performance-Informationen berichtet werden.

9. VIM (360) nach einem der Ansprüche 1 bis 8, wobei die Sammlung einer oder mehrerer PM-Messungen eine mittlere CPU-Nutzung, eine CPU-Spitzennutzung, eine mittlere Speichernutzung, eine Speicherspitzennutzung, eine Anzahl eingehender Internetprotokoll-(IP-)Pakete, eine Anzahl ausgehender IP-Pakete, eine Anzahl von Oktetten eingehender IP-Pakete oder eine Anzahl von Oktetten ausgehender IP-Pakete umfasst.

10. Netzwerkfunktions-Virtualisierungs-Infrastruktur, NFVI, (350), umfassend:
einen Speicher; und
einen oder mehrere Prozessoren, die konfiguriert sind zum:
Empfangen, von einem Virtualized Infrastructure Manager, VIM, (360) einer oder mehrerer Konfigurationsdateien, um eine Sammlung von einer oder mehreren Leistungsmessungsmessungen, PM, die mit einer Virtual Network Function, VNF, einer zugehörigen Virtualisierungsressource, VR, verbunden sind, zu konfigurieren;
Laden der einen oder mehreren Konfigurationsdateien;
Senden einer Bestätigung an das VIM (360) als Antwort auf die eine oder mehrere Konfigurationsdateien;
periodisches Sammeln von VR-PM-Daten basierend auf einem Intervall, das in der einen oder den mehreren Konfigurationsdateien definiert ist; und
Speichern der periodisch gesammelten VR PM-Daten in einer Datenbank eines Datenerfassungsdienstes, wobei der Speicher zum Speichern der Datenbank des Datenerfassungsdienstes konfiguriert ist.

11. NFVI (350) nach Anspruch 10, wobei der Datensammeldienst ein Ceilometer ist.

12. NFVI (350) nach Anspruch 11, wobei die eine oder mehreren Konfigurationsdateien eine Konfigurationsdatei pipeline.yaml umfassen.

13. NFVI (350) nach einem der Ansprüche 10 bis 12, wobei der eine oder die mehreren Prozessoren ferner konfiguriert sind zum:
Empfangen von Abfragen von dem VIM (360) in Verbindung mit dem VNF-bezogenen VR; und
Senden zumindest einer Teilmenge der periodisch gesammelten VR-PM-Daten in Antwort auf die Abfrage an das VIM (360).

14. NFVI (350) nach einem der Ansprüche 10 bis 13, wobei die Sammlung von einer oder mehreren PM-Messungen eine oder mehrere der folgenden Messungen umfasst: eine oder mehrere PM-Messungen von Rechenressourcen, eine oder mehrere PM-Messungen von Speicherressourcen oder eine oder mehrere PM-Messungen von Netzwerkressourcen.

15. NFVI (350) nach Anspruch 14, wobei die Sammlung von einer oder mehreren PM-Messungen eine mittlere CPU-Auslastung, eine CPU-Spitzenauslastung, eine mittlere Speichernutzung, eine Speicherspitzenauslastung, eine Anzahl eingehender Internetprotokoll-(IP-)Pakete, eine Anzahl ausgehender IP-Pakete, eine Anzahl von Oktetten eingehender IP-Pakete oder eine Anzahl von Oktetten ausgehender IP-Pakete umfasst.

## Revendications

1. Un gestionnaire d'infrastructure virtualisée, VIM, (360), comprenant :
une mémoire ; et
un ou plusieurs processeurs configurés pour :
recevoir une requête à partir d'un gestionnaire de fonction de réseau virtuelle, VNF, VNFM, (340) pour créer une tâche de mesure de performance, PM, de ressource de virtualisation, VR, relative à une VNF ;
envoyer un ou plusieurs fichiers de configuration à un service de collecte de données dans une infrastructure de virtualisation de fonction de réseau, NFVI, (350) pour configurer une collecte d'une ou plusieurs mesures PM ;
recevoir un accusé de réception à partir de la NFVI (350) en réponse aux un ou plusieurs fichiers de configuration ; et
envoyer une réponse au VNFM (340), dans lequel la réponse indique un identificateur de tâche de la tâche PM VR relative à une VNF.

2. Le VIM (360) selon la revendication 1, dans lequel les un ou plusieurs processeurs sont configurés en outre pour :
recevoir une seconde requête à partir du VNFM (340) pour s'abonner à une ou plusieurs notifications disponibles de données associées à la tâche PM VR relative à une VNF ; et
envoyer une seconde réponse au VNFM (340) pour indiquer que l'abonnement aux une ou plusieurs notifications disponibles de données est réalisé, dans lequel la seconde réponse comprend un ou plusieurs paramètres d'identificateur d'abonnement, subscriptionId, qui identifient les une ou plusieurs notifications disponibles de données.

3. Le VIM (360) selon la revendication 2, dans lequel les un ou plusieurs processeurs sont configurés en outre pour :
interroger le service de collecte de données au niveau de la NFVI (350) pour récupérer des données PM associées aux une ou plusieurs notifications disponibles de données ; et
envoyer une notification au VNFM (340) qui indique que les données PM récupérées sont disponibles, dans lequel la notification comprend un identificateur d'instance d'objet, objectInstanceId, qui identifie une ou plusieurs instances d'objet associées aux données PM récupérées.

4. Le VIM (360) selon une des revendications 1 à 3, dans lequel le service de collecte de données est un célomètre.

5. Le VIM (360) selon la revendication 4, dans lequel les un ou plusieurs fichiers de configuration comprennent un fichier de configuration pipeline.yaml.

6. Le VIM (360) selon une des revendications 1 à 5, dans lequel la réponse comprend un paramètre d'identificateur de tâche PM, pm.JobId, qui indique l'identificateur de tâche de la tâche PM VR relative à une VNF.

7. Le VIM (360) selon une des revendications 1 à 6, dans lequel la requête comprend un paramètre de sélecteur de source, sourceSelector, qui définit des ressources pour lesquelles des informations de performance doivent être collectées en relation avec la tâche PM VR relative à une VNF.

8. Le VIM (360) selon la revendication 7, dans lequel la requête comprend un ou plusieurs parmi : un paramètre de métrique de performance, performanceMetric, qui définit un ou plusieurs types de métriques de performance pour les ressources ; un paramètre de période de collecte, collectionPeriod, qui spécifie une périodicité de collecte avec laquelle des informations de performance seront collectées ; ou un paramètre de période de rapport, reportingPeriod, qui spécifie une périodicité de rapport avec laquelle des informations de performance seront rapportées.

9. Le VIM (360) selon une des revendications 1 à 8, dans lequel la collecte d'une ou plusieurs mesures PM comprend une utilisation moyenne d'unité centrale de traitement, CPU, une utilisation crête de CPU, une utilisation moyenne de mémoire, une utilisation crête de mémoire, un nombre de paquets en protocole Internet, IP, entrants, un nombre de paquets IP sortants, un nombre d'octets de paquets IP entrants, ou un nombre d'octets de paquets IP sortants.

10. Une infrastructure de virtualisation de fonction de réseau, NFVI, (350) comprenant :
une mémoire ; et
un ou plusieurs processeurs configurés pour :
recevoir, à partir d'un gestionnaire d'infrastructure virtualisée, VIM, (360), un ou plusieurs fichiers de configuration pour configurer une collecte d'une ou plusieurs mesures de mesure de performance, PM, associées à une ressource de virtualisation, VR, relative à une fonction de réseau virtuelle, VNF ;
charger les un ou plusieurs fichiers de configuration ;
envoyer un accusé de réception au VIM (360) en réponse aux un ou plusieurs fichiers de configuration ;
collecter périodiquement des données PM VR sur la base d'un intervalle défini dans les un ou plusieurs fichiers de configuration ; et
stocker les données PM VR collectées périodiquement dans une base de données d'un service de collecte de données, dans lequel la mémoire est configurée pour stocker la base de données du service de collecte de données.

11. La NFVI (350) selon la revendication 10, dans laquelle le service de collecte de données est un célomètre.

12. La NFVI (350) selon la revendication 11, dans laquelle les un ou plusieurs fichiers de configuration comprennent un fichier de configuration pipeline.yaml.

13. La NFVI (350) selon une des revendications 10 à 12, dans laquelle les un ou plusieurs processeurs sont configurés en outre pour :
recevoir une interrogation à partir du VIM (360) en relation avec la VR relative à une VNF ; et
envoyer au moins un sous-ensemble des données PM VR collectées périodiquement au VIM (360) en réponse à l'interrogation.

14. La NFVI (350) selon une des revendications 10 à 13, dans laquelle la collecte d'une ou plusieurs mesures PM comprend une ou plusieurs parmi : une ou plusieurs mesures PM de ressources informatiques, une ou plusieurs mesures PM de ressources de stockage ou une ou plusieurs mesures PM de ressources de réseautage.

15. La NFVI (350) selon la revendication 14, dans laquelle la collecte d'une ou plusieurs mesures PM comprend une utilisation moyenne d'unité centrale de traitement, CPU, une utilisation crête de CPU, une utilisation moyenne de mémoire, une utilisation crête de mémoire, un nombre de paquets en protocole Internet, IP, entrants, un nombre de paquets IP sortants, un nombre d'octets de paquets IP entrants, ou un nombre d'octets de paquets IP sortants.
